# EUROPEAN PATENT APPLICATION

(11) **EP 1 484 671 A2**
(43) Date of publication of application: **08.12.2004**
(21) Application number: 04101997.7
(22) Date of filing: 07.05.2004
(51) Int. Cl.: G06F 3/12

(54) **Peripheral with remote language setting**

(30) Priority: 04.06.2003 KR 2003036126
(71) Applicant: Samsung Electronics Co., Ltd., Suwon-si, Gyeonggi-Do 442-742 (KR)
(72) Inventor: Oh, Jeong-seok, Jeong-seok OH, Jangan-gu, Suwon-city, Gyeonggi-do (KR)
(74) Representative: Read, Matthew Charles

(57) **Abstract**

Disclosed is a print apparatus and an automatic display language setting method. The automatic display language setting method for a print apparatus connected to a host device through a communication interface and communicating with the host device through the communication interface, comprises the steps of determining whether certain language information has been received through the communication interface from the host device; and setting up a display language of a print apparatus, if it is determined that the language information has been received from the host device, to display information on a display unit of the print apparatus in a language corresponding to the language information. Accordingly, since the present invention can automatically set up the display language of the print apparatus based on information provided from the host device, convenient manipulations of the printer can be provided to the users.

## Description

The present invention relates to a computer peripheral, e.g. a printer or a scanner, comprising a local user interface, interface means for receiving signals from a computer, memory and control means and to the combination of a computer and such a peripheral.

Printer driver programs are typically used by personal computers to convert printing calls made to a generic printing API into device-specific printing commands.
Printer driver programs also the means whereby a user can configure a printer, e.g. to set the page size or paper source.

Printers are typically provided with a keypad and a small display which provide a user interface. The user can configure the printer using the keypad and read operational status information, given by icons and/or text, on the display.

Printer manufacturers distribute and market printers pre-configured with menus, status messages, etc. for display by the printers' displays in the languages used in the countries where the printers are sold. Printer manufactures expend a great deal of time and money localising the menus and messages of their printers on a country-by-country basis.

Accordingly, printer manufacturers have provided printers with multilingual firmware so that users can select a preferred user interface language after purchase. The user must, however, repeatedly manipulate keys of the keypad in order to select the desired language, which is inconvenient for the user.

A peripheral, according to the present invention, is characterised in that the memory stores multilingual user interface text and the control means is responsive to a language specifying signal from the interface means to select user interface text in a language specified thereby from the memory for display by the local user interface.

Preferably, the peripheral has a printing function.

According to the present invention, there is also provided a combination of a computer and a computer peripheral, wherein the computer peripheral is a peripheral according to the present invention and the computer is programmed for transmitting a language specifying signal to the peripheral.

The computer is preferably programmed with an operating system, e.g. Windows 2000, or a desktop environment, e.g. KDE or Gnome, having user settable locale settings and to generate the language specifying signal in dependence on a locale setting.

According to the present invention, there is also provided a signal, which may be recorded on or in a data carrier, representing program codes for programming the computer of a combination according to the present invention, the program being for controlling the computer to transmit a language specifying signal to the peripheral.

An embodiment of the present invention will now be described, by way of example, with reference to the accompanying drawings, in which:
Figure 1 is a block diagram illustrating a printing system according to the present invention; and
Figure 2 is a flowchart illustrating an automatic display language setting method for the printer of the print system shown in Figure 1.

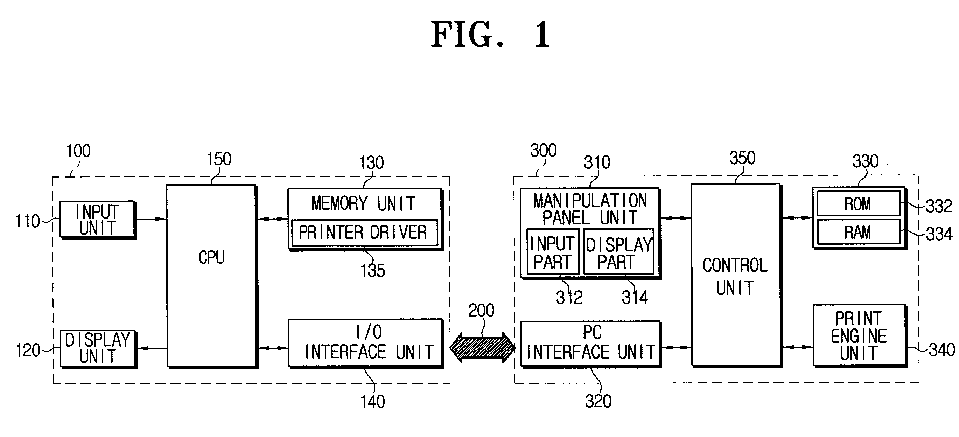

Referring to Figure 1, a print system comprises a computer 100 as a host device and a printer 300. As shown in Figure 1, the computer 100 and the printer 300 are connected to each other through a communication interface 200.

The computer 100 has an input unit 110, a display unit 120, a memory unit 130, an input/output (I/O) interface unit 140 and a central processing unit (CPU) 150.

The input unit 110 is a key input device such as a keyboard and sends key input signals to the CPU 150 in response to operation of its keys.

The display unit 120 displays the graphical and/or text interfaces of programs running on the computer 100. The display unit 120 is a CRT or LCD monitor.

The memory unit 130 comprises ROM storing low level programs such as the BIOS (basic input/output system) for the CPU 150. Other operating system and application programs, including a printer driver, are stored on hard disk or the like and are temporarily loaded in RAM, included in the memory unit, so that they can be executed by the CPU 150. The RAM also stores program data in addition to the executables themselves. The printer driver 135 (as an application program supporting the print performance of the printer 300), converts to-be-printed files prepared in an application program of the computer 100, i.e. generic printing calls, into image data that the printer 300 can recognize, and temporarily stores that data in the RAM of memory unit 130 before sending the image data to the printer 300.

The printer driver 135 also provides a printer driver registration information setting window which is displayed by the display unit 120 so that the user can set various print settings related to printing of documents. The printer driver registration information setting window is displayed in a language set in the printer driver program setting process. In general, it is designed to automatically set up the printer's display language to the language of the "locale" established in the operating system, e.g. "Regional Options" in Windows 2000. The display language of the printer is not limited to the "locale" of the computer operating system environment and a user may select his or her desired language out of multiple languages that the printer driver 135 supports. The printer driver 135 displays the printer driver registration information setting window in a language corresponding to the set display language according to a request signal for the printer driver registration information setting window. Furthermore, the printer driver 135 sends to the printer 300 language information corresponding to the display language set by operation of the CPU 150.

The I/O interface unit 140 is provided to communicate with the printer through the communication interface 200 and supports mutual data communications between the CPU 150 and the printer 300. The I/O interface unit 140 sends print data and print information under the control of the CPU 150.

The CPU 150 controls the overall operation of the computer 100 based on the programs stored in the memory unit 130.

The printer 300 includes a manipulation panel unit 310, a PC interface unit 320, a memory unit 330, a print engine unit 340 and a control unit 350.

The manipulation panel unit 310 has an input part 312 provided with a plurality of keys enabling a user to select diverse print functions, supported by the printer 300, and a display part 314 for displaying the operational status of the printer 300 under the control of the control unit 350.

The PC interface unit 320 is provided to communicate with the computer 100 through the communication interface 200 and supports mutual data communications between the computer 100 and the control unit 350. The PC interface 320 receives data from the computer 100 through the communication interface 200 and sends data from the control unit 350 to the computer 100 through the communication interface 200.

The memory unit 330 has a ROM 332, which is a non-volatile memory device, for storing various control programs, necessary for the printer 300 to perform its functions, and a RAM 334, which is a volatile memory device, for temporarily storing data as needed during the execution of the programs of the control unit 350. Furthermore, the memory unit 130 stores multilingual firmware.

The print engine unit 340 carries out print jobs under the control of the control unit 350.

When electric power is applied to the printer 300, the control unit 350 controls the overall operations of the printer 300 according to the control programs stored in the memory unit 330.

The control unit 350 determines whether language information, corresponding to a display language set in the printer driver 135, has been received from the computer 100 through the PC interface unit 320. Upon determining that the language information corresponding to the display language set in the printer driver 135 has been received, the control unit 350 sets the display language of the printer based on the language information corresponding to the display language set in the printer driver 135. The display language of the printer 300 is the language selected for displaying information on the display part 314. Subsequently, menu information, option information and message information for displaying the operational status of the printer 300, and so on, which are set in the printer 300, is displayed on the display part 314.

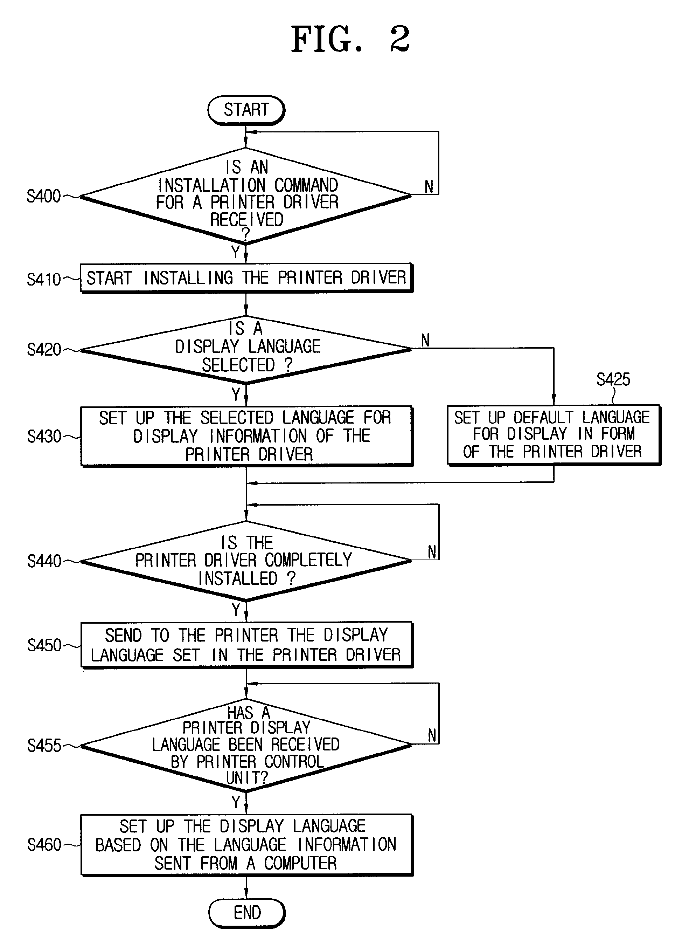

Referring to Figure 2, the automatic language setting method begins with step S400 where the CPU 150 of the computer 100 determines whether an installation command for the printer driver 135 has been received through the input unit 110 (decision step S400). If the CPU 150 decides that the installation command for the printer driver 135 has been received ("Yes" path from decision step S400), the CPU 150 runs a printer driver installation program to install the printer driver 135 in the memory unit 130 (S410). During the installation of the printer driver program in the memory unit 130, the CPU 150 displays a printer driver installation window on the display unit 120. If no installation command has been received ("No" path from decision step S400), the CPU 150 continuously monitors input unit 110, in anticipation of receiving this or other commands.

The CPU 150 then determines whether a language has been selected for displaying a printer driver registration information setting window through the input unit 110 (decision step S420). If the CPU 150 receives a selection signal for any of multiple languages provided on the printer driver installation window through the input unit 110 ("Yes" path from decision step S420), the CPU 150 sends the selected language information to the printer driver 135 to set the selected language information as a display language of the printer driver 135 (S430). On the contrary, if the CPU 150 determines that a display language has not been selected in decision step S420, the CPU 150 sends to the printer driver 135 language information set as the default language information in order to set the default language as the display language of the printer driver 135 (S425). In the language information set as the default language indicates information corresponding to the languages set for the operating system of the computer 100 (e.g., Windows 2000).

The CPU 150 the determines whether the printer driver 135 is completely installed (decision step S440). If the CPU 150 determines that the printer driver 135 is completely installed "(Yes" path from decision step S440), the CPU 150 transfers to the printer 300 language information corresponding to the display language set in the printer driver 135 (S450). For example, in case that "Korean" is set for a display language to the printer driver 135, the printer driver 135 transfers to the printer 300 information corresponding to the "Korean". If the printer driver 135 has not been completely installed ("No" path from decision step S440), the CPU 150 continues to monitor installation of the printer driver 135.

Subsequently, the control unit 350 of printer 300 determines whether information corresponding to the display language set in the printer driver 135 has been received from the computer 100 through the PC interface unit 320 (decision step S455). If the control unit 350 determines that the information corresponding to the display language set in the printer driver 135 has been received ("yes" path from decision step S455), the control unit 350 sets the display language of the printer 300 based on language information corresponding to the received display language (S460). If all the information pertaining to the set display language has not been received by the control unit 350n ("No" path from decision step S455), the control unit 350 continues to monitor the PC interface unit 320 for this, and other data/commands. Thereafter, all information to be displayed on the display part 314 is displayed in a language corresponding to the display language set in the printer 300. For example, in the event that information sent from the computer 100 in correspondence with the display language is information corresponding to the language "Korean", "Korean" language is automatically set up for the display language of the printer 300. Accordingly, all information to be displayed on the display part 314 thereafter is displayed in the Korean language. This indicates that the control unit 350 selects the firmware prepared in the Korean language from multiple firmwares recorded in the memory unit 130.

As discussed above, the descriptions provided above have been made in regard to a printer 300 as an example of a print apparatus connected to a host device. However, as one skilled in the art of the invention can appreciate, the various embodiments of the present invention can be applied to a combination office device having the functions of a printer, facsimile machine, scanner, and photocopier, and as such, are not limited to only that of a printer 300. Furthermore, the embodiments of the present invention can be applied to all electronic devices communicating with a host device connected through a communication interface and equipped with a display unit for display information.

Further as described above, since the automatic display language setting method for the print apparatus according to the embodiments of the present invention are constructed to automatically set up the display language of the print apparatus based on information provided from a host device rather than manually setting up the display language of the print apparatus through a manipulation panel by users, there exists an advantage that convenient manipulations can be provided to the users.

## Claims

1. A computer peripheral comprising a local user interface, interface means for receiving signals from a computer, memory and control means, **characterised in that** the memory stores multilingual user interface text and the control means is responsive to a language specifying signal from the interface means to select user interface text in a language specified thereby from the memory for display by the local user interface.

2. A computer peripheral according to claim 1, having a printing function.

3. The combination of a computer and a computer peripheral, wherein the computer peripheral is a peripheral according to claim 1 or 2 and the computer is programmed for transmitting a language specifying signal to the peripheral.

4. A combination according to claim 3, wherein the computer is programmed with an operating system or desktop environment having user settable locale settings and programmed to generate the language specifying signal in dependence on a locale setting.

5. A signal representing program codes for programming the computer of a combination according to claim 3 or 4, the program being for controlling the computer to transmit a language specifying signal to the peripheral.

6. A data carrier having a recording of a signal according to claim 5 therein or thereon.

7. Print apparatus, comprising:
a display unit;
an interface adapted to communicate with a host device; and
a control unit for determining whether certain language information from the host device has been received through the interface, and, if it is determined that the language information has been received, displaying display information on the display unit in a language corresponding to the language information.

8. The print apparatus as claimed in claim 9, wherein the language information is display language information of a device driver set when the device driver is installed in the host device to control operation of the print apparatus.

9. The print apparatus as claimed in claim 9, wherein the information to be displayed on the display unit includes menu information, option information, and message information displaying an operational status of the print apparatus which are set in the print apparatus.

10. An automatic display language setting method for a print apparatus connected to a host device through a communication interface and communicating with the host device through the communication interface, comprising steps of:
determining whether certain language information has been received through the communication interface from the host device; and
setting up a display language of a print apparatus to display information to be displayed on a display unit of the print apparatus in a language corresponding to the language information if it is determined that the language information is received from the host device.

11. The automatic display language setting method as claimed in claim 10, wherein the language information received from the host device is display language information of a device driver which is set when the device driver for controlling operation of the print apparatus is set up in the host device.

12. The automatic display language setting method as claimed in claim 10, wherein the print apparatus includes a facsimile machine, a printer, and a combination device providing functions of the facsimile machine and the printer.

13. An automatic display language setting method for a print apparatus in a print system having a host device connected through the print apparatus and a communication interface, comprising:
sending to the print apparatus display language information of a device driver which is set when the device driver for controlling operation of the print apparatus is set up in the host device;
determining whether the display language information of the device driver has been received from the host device; and
setting up a display language of the print apparatus to display information to be displayed on a display unit of the print apparatus in a language corresponding to the display language information of the device driver, if it is determined that the display language information of the device driver has been received from the host device.

14. The automatic display language setting method as claimed in claim 13, wherein the sending step comprises:
setting up the device driver in a memory of the host device if an installation command for the device driver has been received;
selecting the display language of the device driver; and
sending to the print apparatus the display language information of the device driver to set up the display language of the print apparatus in the same language as the display language of the device driver.

15. The automatic display language setting method as claimed in claim 13, wherein the print apparatus includes a facsimile, a printer, and a combination device providing functions of the facsimile and the printer.
